# EUROPÄISCHE PATENTSCHRIFT

(11) **EP 0 396 500 B1**
(45) Veröffentlichungstag und Bekanntmachung des Hinweises auf die Patenterteilung: **01.06.1994**
(21) Anmeldenummer: 90810156.1
(22) Anmeldetag: 01.03.1990
(51) Int. Cl.: F16K 17/38, F17C 13/12, A62C 3/00

(54) **Schutzvorrichtung für Gasdruckbehälter**
Apparatus for protecting pressurized-gas containers
Dispositif de protection de récipients à gaz pressurisé

(30) Priorität: 14.03.1989 CH 939/89
(43) Veröffentlichungstag der Anmeldung: 07.11.1990
(73) Patentinhaber: ALUSUISSE-LONZA SERVICES AG, 8034 Zürich (CH)
(72) Erfinder: Reznik, Israel, CH-8702 Zollikon (CH)

(56) Entgegenhaltungen:
- FR-A- 2 352 231
- GB-A- 2 029 050
- US-A- 3 455 316

## Beschreibung

Die Erfindung bezieht sich auf eine Schutzvorrichtung gegen eine Ueberhitzung entsprechend den im Oberbegriff von Patentanspruch 1 aufgeführten Merkmalen, die aus der US-A 3455316 bekannt sind.

Druckbehälter werden seit langem gegen Ueberdruck, welcher durch Hitzeentwicklung entsteht, geschützt. Dies erfolgt z.B. durch den Einbau einer Berstscheibe bekannter Bauart, welche bei einem kritischen Druck reisst und das Gas entweichen lässt.

Weiter ist auch bekannt, eine Berstdruckscheibe durch einen Schmelzstopfen aus einer bei einer niedrigen Temperatur schmelzenden Legierung zu ersetzen. Es lassen sich Legierungen herstellen, die einen unter dem Erstarrungspunkt der einzelnen Komponenten liegenden Schmelzpunkt haben. Diese Legierungen werden auch als Woodmetalle bezeichnet.

Steigt die Temperatur durch generelle oder lokale Ueberhitzung im Bereich des Schmelzstopfens auf eine vorbestimmte, von der Legierungszusammensetzung abhängige Temperatur, so schmilzt das Metall und das Gas kann aus dem Druckbehälter entweichen. Ueblicherweise werden für Schmelzstopfen Legierungen mit einem Schmelzpunkt von 80 - 120°C eingesetzt.

Zur Speicherung und zum Transport von Gasen in zylindrischen Druckbehältern mit hohem Innendruck werden in neuerer Zeit auch sehr grosse Gaszylinder mit Durchmessern bis etwa 600 mm, insbesondere 550 mm, und Längen von 6 oder sogar 12 bis 13 m hergestellt. Diese grossen Druckbehälter haben in der Praxis abgefüllt einen Betriebsdruck von über 200 bar.

Grosse Druckbehälter aus Stahl haben den Nachteil, dass sie ein sehr hohes Leergewicht haben. Insbesondere für den Transport gelangen deshalb, wegen ihres kleineren Gewichts, Druckbehälter aus Aluminium zum Einsatz. Wie in der DE-C2 3103646 beschrieben, können Druckbehälter aus Aluminium auch mit verminderter Wandstärke hergestellt werden. Die Bereiche verminderter Wandstärke müssen jedoch faserverstärkt sein, beispielsweise durch in einer schwer entflammbaren Kunststoffmatrix gebundene Glasfasern.

Grosse Druckbehälter der genannten Bauart haben beidends Abschlusskappen, an welchen je ein Ventil oder ein Abschlussstopfen anschliessbar ist. Falls ein Schmelzstopfen integriert ist, schmilzt dieser, sobald eine Temperatur im Bereich von etwa 100°C überschritten wird, und fliesst aus. Darauf kann das im Druckbehälter gespeicherte Gas ohne nennenswerten Widerstand entweichen.

Unbefriedigend ist die Tatsache, dass bei einem Feuerausbruch oder einer sonstigen lokalen Erhitzung im mittleren Bereich eines grossen Druckbehälters eine schädigende Einwirkung erfolgen kann, bevor wenigstens einer der stirnseitigen Schmelzstopfen geschmolzen ist, und das Gas des Druckbehälters entweichen kann. Die Hitzeentwicklung im mittleren Bereich kann derart fortschreiten, dass der Druckbehälter schon vor dem Oeffnen der Schmelzstopfen bersten kann, selbst wenn er schon zum grösseren Teil geleert ist. Diese Gefahr besteht in erster Linie bei Druckbehältern aus Aluminium.

Aus der US-A 3455316 ist ein Druckgefäss aus Stahl, beispielsweise ein Trailertank für den Transport verflüssigter Gase, beschrieben. Neben Standard-Sicherheitsventilen ist ein unterstützendes Ueberdruckventil eingebaut, welches in der Ruhephase geschlossen ist und von überall an kritischen Punkten des Druckgefässes angeordneten Wärmesensoren ausgelöst wird. Jeder Wärmesensor enthält eine metallische Sicherung, welche bei einem Brand durchschmilzt, falls die Gefässwand nicht durch die dahinterliegende Flüssigkeit gekühlt wird. Die Verbindungsrohre von den Wärmesensoren zum unterstützenden Ueberdruckventil sind im Innern des Tanks geführt und stehen unter Ueberdruck, welcher beim Schmelzen der metallischen Sicherung entweicht, was seinerseits die Oeffnung des unterstützenden Ueberdruckventils zur Folge hat. Durch die Auslösung dieses unterstützenden Ueberdruckventils wird verhindert, dass der Druck im Druckgefäss auf über etwa 20 bar steigt, was eine Explosionsgefahr beinhalten würde.

Der Erfinder hat sich die Aufgabe gestellt, eine Schutzvorrichtung für Druckbehälter der eingangs genannten Art zu schaffen, welche die Gefahren einer Ueberhitzung, insbesondere einer Feuereinwirkung, unabhängig von der Länge, dem Durchmesser und dem Fülldruck eines zylinderförmigen Druckbehälters für hochgespannte Gase auf ein vernachlässigbares Minimum herabgesetzt, auch bei Behältern aus Aluminium. Die Schutzvorrichtung soll preisgünstig in der Herstellung, einfach in der Funktionsweise und von erhöhter Sicherheit sein. Weiter soll die erwähnte Schutzvorrichtung universell verwendbar sein.

Die Aufgabe wird in bezug auf die Vorrichtung erfindungsgemäss nach den Merkmalen des Kennzeichens von Patentanspruch 1 gelöst. Alternativ kann das Druckrohr mit beiden Abschlusskappen eines Druckbehälters verbunden sein und bildet so einen Ringschluss.

Die Legierung der an sich bekannten, jedoch erfindungsgemäss zusätzlich in einem Druckrohr angeordneten Schmelzstopfen schmilzt vorzugsweise in einem Bereich von etwa 80 - 120°C, insbesondere bei etwa 100°C. Die Schmelztemperatur darf nicht zu niedrig liegen, weil sonst das Metall ohne das Vorliegen einer Gefahrensituation schmelzen könnte, beispielsweise durch intensive Sonneneinstrahlung in südlichen Ländern. Andrerseits darf die Schmelztemperatur nicht zu hoch sein, weil sonst eine schädigende Einwirkung nicht mit hinreichender Sicherheit ausgeschlossen werden kann.

Die entlang eines Druckrohrs angeordneten Schmelzstopfen haben bevorzugt einen Abstand von 1 - 2 m, insbesondere von 1,5 m.

Die Anordnung des Druckrohrs oder der Druckrohre für einen Druckbehälter kann nach einer ersten Variante dadurch erfolgen, dass sich ein Druckrohr, ausgehend von einer Abschlusskappe, bis in den Bereich der andern Abschlusskappe erstreckt. Der Abstand des letzten, stirnseitig angebrachten Schmelzstopfens des Druckrohrs hat von der andern Abschlusskappe des Druckbehälters höchstens einen Abstand, der dem Abstand zweier Schmelzstopfen entspricht.

Nach einer zweiten Variante erstreckt sich von jeder Abschlusskappe eines Druckbehälters ein Druckrohr in Richtung der andern Abschlusskappe, parallel zur Längsachse des Druckbehälters geführt. Die beiden stirnseitigen Enden der Druckrohre mit einem Schmelzstopfen haben wiederum einen Abstand, welcher etwa dem Abstand von zwei Schmelzstopfen eines Druckrohrs entspricht. Die beiden Druckrohre nach dieser zweiten Variante können verschieden oder gleich lang sein.

Falls ein Druckbehälter ein hochgespanntes, d.h. unter hohem Druck stehendes Gas enthält, das beim Eintritt in ein Feuer nicht reagiert, wie beispielsweise Helium, Argon, Stickstoff oder Kohlendioxid, kann dieses im Schadenfall bei verflüssigtem Schmelzstopfen direkt von der Armatur ins Freie bzw. direkt in das Feuer geleitet werden und so ggf. eine gewisse Löschwirkung erzielen.

Bei das Feuer fördernden brennbaren Gasen dagegen, wie beispielsweise Erdgas, Kochgas, Sauerstoff, Methan oder Wasserstoff, darf das bei verflüssigtem Schmelzstopfen entweichende Gas aus naheliegenden Gründen nicht direkt austreten. Vorzugsweise mündet deshalb eine mit einem Schmelzstopfen verschlossene Oeffnung in ein Entlüftungsrohr, welches entweichende Gase aufnimmt und ausserhalb des Bereichs des bzw. der Druckbehälter in die Atmosphäre austreten lässt, beispielsweise oberhalb des Daches eines Tube-Trailers oder ausserhalb eines Raumes mit einer Batterie von Druckbehältern. Sowohl bei einem als auch bei Batterien von Druckbehältern können die Entlüftungsrohre einzeln aus der Gefahrenzone herausgeführt werden. Es ist jedoch meist wirtschaftlicher und technisch einfacher, die Entlüftungsrohre gesamthaft oder gruppenweise zu einem gemeinsamen Rohr zusammenzufassen und ausserhalb der Gefahrenzone zu führen.

Falls mehrere Druckbehälter in einem Gestell zur Lagerung oder zum Transport von Gasen zusammengefasst sind, beispielsweise drei mal drei oder vier mal drei Druckbehälter, spricht man von einer Batterie von Druckbehältern. In diesem Fall kann jeder Druckbehälter ein oder zwei Druckrohre haben. Es können auch mehrere Druckbehälter ein gemeinsames Druckrohr haben, welches zweckmässig eine entsprechend grössere Nennweite haben kann.

Der Durchmesser von Druckrohren liegt, je nach dem allenfalls zu entlüftenden Gasvolumen, vorzugsweise im Bereich von 5 - 15 mm. Der Querschnitt der Schmelzstopfen entspricht vorzugsweise etwa dem Innenquerschnitt der Druckrohre.

Bei einer Batterie von Druckbehältern sind alle angeordneten Druckrohre bevorzugt kommunizierend miteinander verbunden. Nach dem Verflüssigen des ersten Schmelzstopfens in einem Schadenfall mit lokaler Hitzeentwicklung beginnen sich die Druckbehälter gleichmässig zu entleeren. Bei grösser werdender Hitze werden kontinuierlich weitere Schmelzstopfen verflüssigt. Damit kann durch die frei werdenden Oeffnungen mehr Gas austreten, die Druckbehälter entleeren sich jedoch in gleichem Masse, weil alle über die verbundenen Druckrohre kommunizieren.

Bei einzelnen Druckbehältern sind Druckrohre zweckmässig unterhalb des Zylinders, bei einer Batterie von Druckbehältern im Bereich zwischen den Behältern angeordnet. So ist gewährleistet, dass die Schmelzpfropfen bei auftretenden Gefahren raschmöglichst ansprechen.

Druckrohre müssen nicht nur demselben Druck wie der Druckbehälter widerstehen, sie müssen weiter bei erhöhter Temperatur ihre Festigkeit aufrechterhalten. Als Werkstoff für die Druckrohre kommen deshalb in erster Linie Stahl, Kupfer und Messing in Frage. Für die Entlüftungsrohre und Armaturen sind dieselben Materialien bevorzugt.

Der Schwerpunkt der Verwendung der erfindungsgemässen Schutzvorrichtung liegt bei Druckbehältern aus Aluminium, insbesondere mit einer faserverstärkten Ummantelung.

Standardisierte Druckbehälter für Erdgas, wie sie insbesondere in englischsprachigen Ueberseegebieten verwendet werden, haben eine Länge von etwa 6 m (20 ft.) und einen Durchmesser von etwa 550 mm. Volle Druckbehälter haben einen Betriebsdruck von etwa 210 bar (3000 psi).

Der Transport der Druckbehälter erfolgt in sogenannten Tube-Trailern, welche mit einer Batterie von Druckbehältern beladen sind.

Der wesentliche Vorteil der erfindungsgemässen Schutzvorrichtung von einzelnen oder Batterien von Druckbehältern liegt darin, dass eine lokale Ueberhitzung, insbesondere Feuer, irgendwo auftreten kann, auch im Bereich der Mitte. Innerhalb kurzer Zeit wird der nächstliegende Schmelzstopfen schon bei etwa 100°C verflüssigt und erlaubt dem Gas, unter irgendwelchen Druckbedingungen, zu entweichen und einen durch die Erwärmung aufgebauten Druck zu eliminieren, bevor ein Bersten des Druckbehälters erfolgen kann. Die Schutzvorrichtung funktionniert also unabhängig vom Füllstand des Druckbehälters.

Die Erfindung wird anhand der in der Zeichnung dargestellten Ausführungsbeispiele, welche auch Gegenstand von abhängigen Patentansprüchen sind, näher erläutert. Es zeigen schematisch:
- Fig. 1 eine Ansicht eines zylinderförmigen Druckbehälters mit einer Schutzvorrichtung,
- Fig. 1A ein Detail von Fig. 1,
- Fig. 2 einen Längsschnitt durch einen an sich bekannten Schmelzstopfen,
- Fig. 3 eine perspektivische Ansicht eines zylinderförmigen Druckbehälters mit einer ringförmigen Schutzvorrichtung,
- Fig. 4 einen Schnitt durch ein Ventil , und
- Fig. 5 einen Querschnitt durch eine Batterie von zylinderförmigen Druckbehältern mit Druckleitungen.

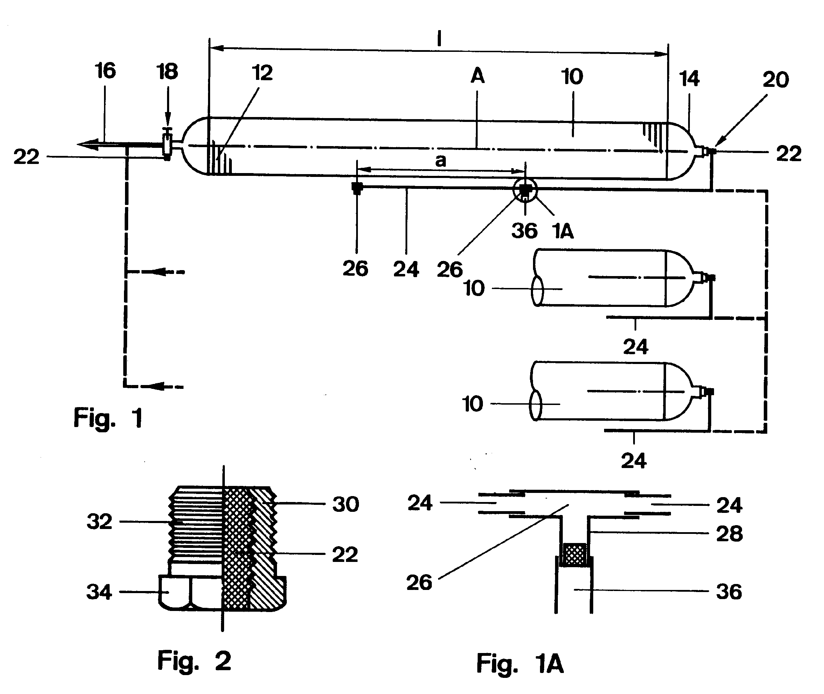

Der in Fig. 1 dargestellte zylinderförmige Druckbehälter 10 dient dem Lagern und/oder Transportieren eines hochgespannten Gases. Der aus Aluminium bestehende Behälter ist mit Glasfasern 12 verstärkt und beidends mit einer kalottenartigen Abschlusskappe 14 versehen. In Richtung der Abflussleitung 16 ist ein Ventil 18 vorgesehen, auf der andern Seite des Druckbehälters 10 ein Abschlussstopfen 20.

Ein voller Druckbehälter 10 hat einen Betriebsdruck bis etwa 210 bar. Ohne Wärmeeinwirkung wurden die Druckbehälter 10 bei einem Druck von etwa 600 bar getestet, wobei alle Bersttests positiv verliefen.

Sowohl das Ventil 18 als auch der Abschlussstopfen 20 haben je einen Schmelzstopfen 22 aus einer bei etwa 100°C schmelzenden Legierung.

Würde im mittleren Bereich des eine Länge 1 von etwa 6 m aufweisenden Druckbehälters 10 ohne die erfindungsgemässe Schutzvorrichtung Feuer auftreten, verlöre die Behälterwand aus Aluminium bei etwa 200°C an Festigkeit. Die beiden endständigen Schmelzstopfen würden kein Gas entweichen lassen, weil sie die Schmelztemperatur wegen des nur in der Mitte einwirkenden Feuers nicht erreichten. Dadurch könnte der Druckbehälter 10 bersten, selbst wenn er grösserenteils entleert wäre.

Gemäss Fig. 1 zweigt vom Abschlussstopfen 20 ein Druckrohr 24 ab und verläuft in Axialrichtung A entlang des zylinderförmigen Druckbehälters 10. Etwa bei einem Drittel der Länge 1, entsprechend dem Abstand a, ist eine im wesentlichen T-förmige Armatur 26 in das Druckrohr 24 eingebaut, welche in Fig. 1A im Detail dargestellt ist. Der vertikal vom Druckrohr 24 abkragende Schenkel 28 der T-förmigen Armatur 26 enthält einen Schmelzstopfen 22. Ein angedeutetes Entlüftungsrohr 36 nimmt bei geschmolzenem Schmelzstopfen 22 austretendes Gas auf.

Das Druckrohr 24 erstreckt sich über ein weiteres Drittel der Länge a des Druckbehälters 10. Den Abschluss des Druckrohrs 24 bildet eine weitere T-förmige Armatur 26 die in wenigstens einem Schenkel mit einem Schmelzstopfen 22 verschlossen ist.

Tritt nun im mittleren Bereich des Druckbehälters 10 eine lokale Erhitzung, insbesondere Feuer, auf, so wird wenigstens einer der am Druckrohr 24 angeordneten Schmelzstopfen 22 verflüssigt, der Druckbehälter 10 kann sich entleeren.

In Fig. 1 sind zwei weitere Druckbehälter mit einer Schutzvorrichtung angedeutet. Die Druckrohre 24 aller Druckbehälter 10 kommunizieren. Im Schadenfall kann das Gas aller Druckbehälter 10 durch eine vom verflüssigten Metall wenigstens eines Schmelzstopfens 22 freigegebene Austrittsöffnung abfliessen.

Bei einer normal en Entleerung der Druckbehälter 10 fliesst das Gas über eine gemeinsame Abflussleitung 16 zur weiteren Verwendung ab.

Fig. 2 zeigt einen an sich bekannten Schmelzstopfen 22, welcher in eine Stahl- oder Messinghülse 30 mit Innen- und Aussengewinde 32 und Sechskant-Schraubenkopf 34 eingedreht ist.

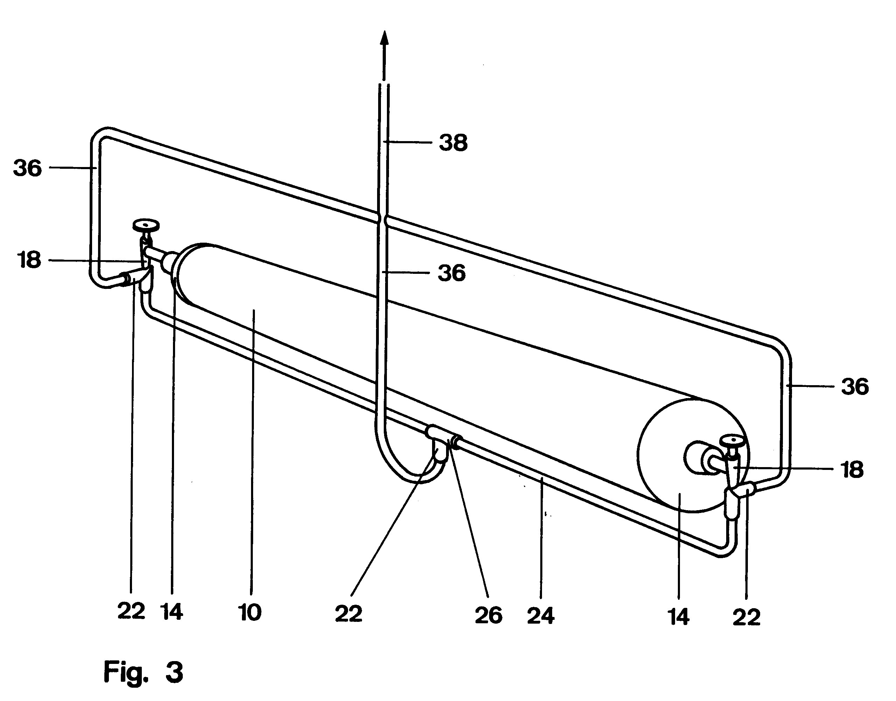

In Fig. 3 ist der zylinderförmige Druckbehälter 10 perspektivisch dargestellt. Beidseits sind Ventile 18 angeordnet, über welche ein ringförmiges Druckrohr 24 leitend verbunden sind. Weiter ist das Prinzip des Entlüftungssystems dargestellt. An die Schmelzstopfen 22 in den Ventilen 18 und den T-förmigen Armaturen 26 schliesst ein Entlüftungsrohr 36 an. Die Entlüftungsrohre 36 münden in ein gemeinsames Rohr 38, welches in den Bereich ausserhalb des Druckbehälters führt, beispielsweise auf das Dach eines Tube-Trailers. Damit ist gewährleistet, dass bei lokaler Erhitzung austretendes, brennbares Gas den Schaden nicht noch vergrössert.

Einfachheitshalber ist in Fig. 3 nur eine T-förmige Armatur mit Entlüftungsrohr 36 gezeichnet. In Wirklichkeit hat das Druckrohr 24 alle 1,5 m eine solche T-förmige Armatur 26 mit Entlüftungsrohr 36.

Nach einer weitern, in Fig. 3 nicht dargestellten Variante können die Entlüftungsrohre 36 einzeln aus dem Gefahrenbereich geführt sein.

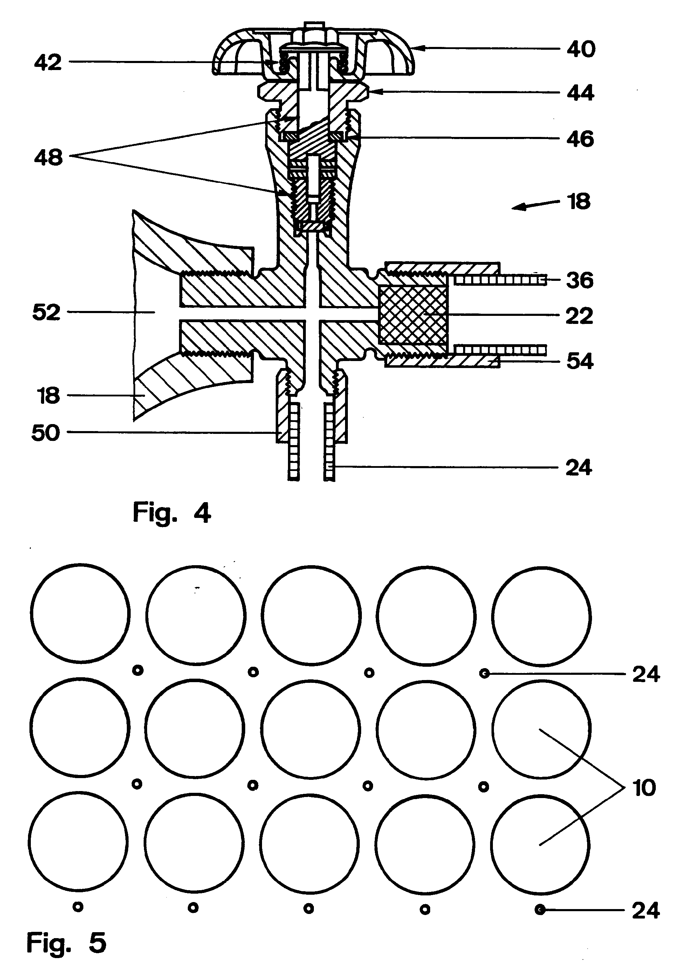

Fig. 4 zeigt ein Ventil 18, welches in eine Abschlusskappe eines Druckbehälters geschraubt ist. Das Ventil 18 umfasst die eine normale Entleerung regelnden, in an sich bekannter Weise ausgebildeten Bestandteile, wie ein Handrad 40, eine Feder 42, eine Kappe 44, eine Dichtung 46 und eine Anordnung 48 zur Druckreduzierung.

Vom Ventil zweigt das Druckrohr 24, mit einer Ueberwurfhülse 50 befestigt, ab. Die erfindungswesentliche Tatsache, dass der Innenraum 52 stets mit dem Druckrohr 24 kommuniziert, ist aus Fig. 4 gut ersichtlich.

Weiter ist ein Schmelzstopfen 22 Bestandteil des Ventils 18. Mit einer Ueberwurfhülse 54 ist ein Entlüftungsrohr 36 angebracht.

Falls im Bereich des Ventils die Temperatur über 100°C steigen sollte, verflüssigt sich der Schmelzstopfen 22. Das im Innenraum 52 des Druckbehälters gelagerte Gas kann direkt in ein Entlüftungsrohr 36 fliessen und wird ausserhalb des Gefahrenbereichs gebracht.

Die Abflussleitung (16 in Fig. 1) für die normale Entleerung des Innenraums 52 des Druckbehälters 10 ist, da für den Fachmann selbstverständlich, einfachheitshalber nicht gezeichnet.

Fig. 5 zeigt das Prinzip einer Batterie von Druckbehältern 10, beispielsweise auf einem Tube-Trailer, mit Druckrohren 24. Bei der untersten Lage von Druckbehältern 10 sind die Druckrohre 24 direkt unterhalb der Druckbehälter 10 angeordnet. Sie können jedoch auch dazwischen verlaufen. Oberhalb der untersten Lage von Druckbehältern 10 sind die Druckrohre 24 jeweils in den Zwischenräumen angeordnet. Alle dargestellten Druckrohre 24 kommunizieren. Im Prinzip könnten im Schadenfall alle Druckbehälter 10 über eine einzige Oeffnung entleert werden.

## Patentansprüche

1. Schutzvorrichtung gegen eine Ueberhitzung, insbesondere durch Feuer, von im wesentlichen zylinderförmigen Druckbehältern (10) einer Länge (1) von wenigstens 1,5 m, zum Lagern und/oder Transportieren gespannter Gase, welche Druckbehälter (10) an kritischen Stellen verteilt Schmelzstopfen (22) aus einer bei einer niedrigen Temperatur schmelzenden Legierung haben, die beim Schmelzen Gas durchtreten lassen,
dadurch gekennzeichnet,
dass von mindestens einer Abschlusskappe (14) des Druckbehälters (10), welcher an einem Ende ein Ventil (18) und am andern Ende ein Ventil oder einen Abschlussstopfen (20) hat und welcher für hochgespannte Gase ausgelegt ist, ein stets mit dem Innenraum (52) des Druckbehälters (10) kommunizierendes Druckrohr (24) abzweigt, welches in Axialrichtung in radialem Abstand entlang wenigstens eines Teils der Aussenseite des Druckbehälters (10) geführt ist und in welchem in axialen Abständen im wesentlichen T-förmige Armaturen (26) eingebaut sind, welche in ihrem jeweils abkragendem Schenkel (28) einen Schmelzstopfen (22) aufnehmen, und dass das Druckrohr als ein blind endendes Druckrohr (24) mit einem solchen Schmelzstopfen (22) verschlossen ist oder dass das Druckrohr als Ringschluss von Abschlusskappe (14) zu -kappe (14) führt.

2. Schutzvorrichtung nach Anspruch 1, dadurch gekennzeichnet, dass die Schmelzstopfen (22) in regelmässigen Abständen angeordnet sind und aus einer Legierung bestehen, die in einem Bereich von 80 - 120°C, vorzugsweise bei etwa 100°C, schmilzt.

3. Schutzvorrichtung nach Anspruch 1 oder 2, dadurch gekennzeichnet, dass die mit den Schmelzstopfen (22) verschlossenen Oeffnungen in ein zugeordnetes Entlüftungsrohr (36) münden, welches entweichende Gase in die Atmosphäre austreten lässt, vorzugsweise nachdem sich mehrere oderr alle Entlüftungsrohre (36) in einem Sammelrohr (38) vereinigt haben.

4. Schutzvorrichtung nach einem der Ansprüche 1 bis 3, dadurch gekennzeichnet, dass das Druckrohr unter dem Druckbehälter angeordnet ist.

5. Schutzvorrichtung nach einem der Ansprüche 1 bis 4, dadurch gekennzeichnet, dass mehrere Druckbehälter (10) zu einer Batterie zusammengefasst sind.

6. Schutzvorrichtung nach Anspruch 5, dadurch gekennzeichnet, dass in der Batterie von Druckbehältern (10) alle Druckrohre (24) kommunizierend miteinander verbunden sind.

7. Schutzvorrichtung nach Anspruch 6, dadurch gekennzeichnet, dass die Druckrohre (24) im Bereich zwischen den Behältern angeordnet sind.

8. Schutzvorrichtung nach einem der Ansprüche 1 bis 7, dadurch gekennzeichnet, dass das/die Druckrohre (24), Entlüftungsrohr/e (36) und die Armaturen (26) aus Stahl oder Kupfer bestehen.

9. Verwendung einer Schutzvorrichtung nach einem der Ansprüche 1 bis 8 an Druckbehältern (10) aus Aluminium, insbesondere mit einer faserverstärkten Ummantelung (12).

10. Verwendung der Schutzvorrichtung nach Anspruch 9 bei Batterien von Druckbehältern (10) auf "Tube-Trailern".

## Claims

1. Apparatus for protecting substantially cylindrical pressurised containers (10) having a length (1) of at least 1.5 m for the storage and/or transportation of high-pressure gases against overheating, especially by fire, said pressurised containers (10) having fusible plugs (22) made of an alloy melting at a low temperature distributed at critical points and allowing for the passage of the gas when they melt, characterised in that a pressure pipe (24) always communicating with the inner space (52) of the pressurised container (10) branches off from at least one end cap (14) of the pressurised container (10) which has a valve (18) at one end and a valve or an end plug (20) at the other end and is designed for high-pressure gases, said pressure pipe being led in the axial direction at a radial distance along at least part of the outer face of the pressurised container (10) and substantially T-shaped fittings (26) which each receive a fusible plug (22) in their projecting arms (28) being installed therein at axial intervals, and that the pressure pipe in the form of a dead end pressure pipe (24) is sealed by a fusible plug (22) of this kind or that the pressure pipe extends from end cap (14) to end cap (14) in the form of an annular closure.

2. Protective apparatus according to claim 1, characterised in that the fusible plugs (22) are arranged at regular intervals and consist of an alloy which melts in the region of 80 - 120°C, preferably at approximately 100°C,

3. Protective apparatus according to claim 1 or claim 2, characterised in that the openings sealed by the fusible plugs (22) open into an associated vent pipe (36) which allows escaping gases to be discharged into the atmosphere, preferably after several or all of the vent pipes (36) have been combined to form one common pipe (38).

4. Protective apparatus according to one of claims 1 to 3, characterised in that the pressure pipe is arranged below the pressurised container.

5. Protective apparatus according to one of claims 1 to 4, characterised in that several pressurised containers (10) are combined to form a battery.

6. Protective apparatus according to claim 5, characterised in that all of the pressure pipes (24) in the battery of pressurised containers (10) are connected to one another and communicate with one another.

7. Protective apparatus according to claim 6, characterised in that the pressure pipes (24) are arranged in the region between the containers.

8. Protective apparatus according to one of claims 1 to 7, characterised in that the pressure pipe/s (24), vent pipe/s (36) and the fittings (26) consist of steel or copper.

9. Application of a protective apparatus according to one of claims 1 to 8 to pressurised containers (10) made of aluminium, especially with a fibre-reinforced casing (12).

10. Application of the protective apparatus according to claim 9 in batteries of pressurised containers (10) on "tube trailers".

## Revendications

1. Dispositif de protection contre un échauffement excessif, dû notamment à un incendie, de récipients sous pression (10), de forme essentiellement cylindrique, ayant une longueur (1) d'au moins 1,5 m, pour le stockage et/ou le transport de gaz comprimés, récipients (10) comportant, répartis à des endroits critiques, des bouchons fusibles (22) d'un alliage fondant à une température basse, qui laissent passer du gaz en cas de fusion
caractérisé en ce qu'à partir d'au moins un chapeau de fermeture (14) du récipient (10), possédant à une extrémité un robinet (18) et à l'autre extrémité un robinet ou un bouchon de fermeture (20) et conçu pour des gaz fortement comprimés, est dérivé un tuyau à pression (24) qui communique en permanence avec le volume intérieur (52) du récipient (10), tuyau qui s'étend en direction axiale et à distance radiale le long d'au moins une partie du côté extérieur du récipient (10) et dans lequel sont incorporées, à intervalles dans le sens axial, des pièces de robinetterie (26) essentiellement en forme de de T, qui contiennent chacune un bouchon fusible (22) dans leur branche (28) faisant saillie, et que le tuyau à pression (24) se termine à un bout fermé par un tel bouchon fusible (22) ou que le tuyau à pression (24) s'étend d'un chapeau de fermeture (14) à l'autre chapeau de fermeture (14) pour former une boucle fermée.

2. Dispositif de protection selon la revendication 1, caractérisé en ce que les bouchons fusibles (22) sont placés à intervalles réguliers et sont formés d'un alliage fondant dans une plage de 80 - 120°C, de préférence à environ 100°C.

3. Dispositif de protection selon la revendication 1 ou 2, caractérisé en ce que les ouvertures fermées par les bouchons fusibles (22) débouchent dans un tuyau d'échappement (36) coordonné qui laisse sortir à l'atmosphère les gaz s'échappant, de préférence après que plusieurs ou tous les tuyaux d'échappement (36) se sont rassemblés en un tuyau collecteur (38).

4. Dispositif de protection selon une des revendications 1 à 3, caractérisé en ce que le tuyau à pression est disposé sous le récipient sous pression.

5. Dispositif de protection selon une des revendications 1 à 4, caractérisé en ce que plusieurs récipients sous pression (10) sont rassemblés en une batterie.

6. Dispositif de protection selon la revendication 5, caractérisé en ce que tous les tuyaux à pression (24) d'une batterie de récipients sous pression (10) sont raccordés entre eux de manière qu'ils communiquent.

7. Dispositif de protection selon la revendication 6, caractérisé en ce que les tuyaux à pression (24) sont disposés dans la zone située entre les récipients.

8. Dispositif de protection selon une des revendications 1 à 7, caractérisé en ce que le tuyau à pression ou les tuyaux à pression (24), le tuyau d'échappement ou les tuyaux d'échappement (36) et les pièces de robinetterie (26) sont en acier ou en cuivre.

9. Utilisation d'un dispositif de protection selon une des revendications 1 à 8 sur des récipients sous pression (10) en aluminium, en particulier avec une enveloppe (12) renforcée par des fibres.

10. Utilisation du dispositif de protection selon la revendication 9 sur des batteries de récipients sous pression (10) sur des "remorques à tubes".
